# EUROPEAN PATENT APPLICATION

(11) **EP 4 272 552 A1**
(43) Date of publication of application: **08.11.2023**
(21) Application number: 23168829.2
(22) Date of filing: 19.04.2023
(51) Int. Cl.: A01M 7/00, B05B 9/04, B05B 12/00, B05B 12/08

(54) **MULTI-TANK SPRAY SYSTEM AND METHOD FOR CONTROLLING SUCH**

(30) Priority: 04.05.2022 US 202263364147 P; 08.03.2023 US 202318180597
(71) Applicant: Deere & Company, Moline, IL 61265 (US)
(72) Inventor: BHARATIYA, PARESH, 68163 Mannheim (DE); HANSON, DAVID A, 68163 Mannheim (DE); MCMACKIN, LESTER J, 68163 Mannheim (DE); SULLIVAN, DENNIS J, 68163 Mannheim (DE); ENGELBRECHT, JOSHUA J, 68163 Mannheim (DE); WILLIAMS, DAVID L, 68163 Mannheim (DE)
(74) Representative: Reichert, Christian

(57) **Abstract**

A multi-tank spray system (200) is disclosed. The multi-tank spray system (200) comprising: a first tank (110); a second tank (112); a first pump (215); a plurality of valves including a first sump valve (225), a second sump valve (230), and an equalizing valve (235), wherein a first end of the first sump valve (225) is in fluid communication with the first tank (110), a second end of the first sump valve (225) is in fluid communication with (i) a first end of the equalizing valve (235) and (ii) an inlet of the first pump (215), a first end of the second sump valve (230) is in fluid communication with the second tank (112), and a second end of the second sump valve (230) is in fluid communication with a second end of the equalizing valve (235); a plurality of sensors (240, 245, 250, 255, 260, 265); and a tank module (210) configured to: receive a spray mode; receive a measurement from at least one sensor of the plurality sensors (240, 245, 250, 255, 260, 265); and control operation of the plurality of valves (225, 230, 235) and the first pump (215) based on (i) the received spray mode and (ii) the received measurement. Furthermore, a method for controlling a multi-tank spray system (200) is disclosed.

## Description

### FIELD

The present disclosure relates to agricultural sprayers, and in particular, to the combined used of multiple tanks on a sprayer.

### SUMMARY

A multi-tank spray system includes a first tank, a second tank, a first pump, and a plurality of valves including a first sump valve, a second sump valve, and an equalizing valve. A first end of the first sump valve is in fluid communication with the first tank, a second end of the first sump valve is in fluid communication with (i) a first end of the equalizing valve and (ii) an inlet of the first pump. A first end of the second sump value is in fluid communication with the second tank. A second end of the second sump valve is in fluid communication with a second end of the equalizing valve. The system also includes a plurality of sensors and a tank module. The tank module is configured to receive a spray mode, receive a measurement from at least one sensor of the plurality sensors, and control operation of the plurality of valves and the first pump based on (i) the received spray mode and (ii) the received measurement.

The multi-tank spray system may include a second pump. The second end of the second sump valve is in fluid communication with an inlet of the second pump. The tank module is configured to operate the second pump based on (i) the received spray mode and (ii) the received measurement.

The multi-tank system may include a first distribution pipe connected to an outlet of the first pump and a second distribution pipe connected to an outlet of the second pump. In further features, the multi-tank system may include a plurality of spray nozzles. Each nozzle of the plurality of spray nozzles is mounted to at least one of the first distribution pipe or the second distribution pipe.

The tank module might be configured to, in response to determining that the received spray mode indicates that a first fluid stored in the first tank and a second fluid stored in the second tank should be supplied to the first pump, open the (i) first sump valve, (ii) the second sump valve, and (iii) the equalizing value.

Further, the first fluid and the second fluid might be the same fluid.

The plurality of sensors may include a first tank level sensor that measures a fluid level of the first tank.

The tank module might be configured to determine a state of the first tank based on the received measurement, and in response to determining that the first tank is in a low-level state, close the first sump valve.

The plurality of sensors may include a second tank level sensor that measures a fluid level of the second tank. The tank module is configured to determine a state of the second tank based on a received measurement from the second tank level sensor, and in response to determining that the second tank is in a low-level state, open the first sump valve.

The plurality of sensors may include a pressure sensor that measures a fluid pressure associated with an outlet of the first pump. The tank module is configured to determine a state of the first pump based on a measurement received from the pressure sensor, and in response to determining that that the first pump is in a running-dry state, stop the first pump.

A method for controlling a multi-tank spray system includes a multi-tank spray system as described above, further the method includes fluidically connecting both the first tank and the second tank to a pump, measuring a fluid level of the first tank, determining a state of the first tank, and in response to determining that the first tank is in a low-level state, fluidically disconnect the first tank from the pump. In further features, the method includes measuring a fluid level of the second tank and determining a state of the second tank, and in response determining that both the first tank and the second tank are in the low-level state, fluidically connecting the first tank to the pump.

The method may include determining the state of the first tank includes comparing the measured fluid level of the first tank to a threshold value, and in response to determining that the measured fluid level of the first tank is less than the threshold value, setting the state of the first tank to the low-level state.

The method may include measuring an output of the pump, determining a state of the pump based on the measured output, and in response to determining that the pump is running dry, stopping the pump.

Determining a state of the pump may include comparing the measured output to a threshold value, and in response to determining that the measured output is less than the threshold value, setting the state of the pump to a running-dry state.

Fluidically connecting both a first tank and a second tanks to a pump may include opening (i) a first sump valve connected to the first tank, (ii) a second sump valve connected to the second tank, and (iii) an equalizing valve connected to both the first sump valve and the second sump valve.

The method for controlling a multi-tank spray system may further include fluidically connecting both a first pump and a second pump to a first tank, measuring a fluid level of the first tank, determining a state of the first tank, and in response to determining that the first tank is in a low-level state, (i) fluidically disconnecting both the first pump and the second pump from the first tank and (ii) fluidically connecting both the first pump and the second pump to a second tank. In further features, the method includes measuring a fluid level of the second tank, determining a state of the second tank, and in response determining that the second tank is in the low-level state, fluidically connecting both the first pump and the second pump to the first tank.

In other features, the method may include measuring an output of the first pump, determining a state of the first pump based on the measured output, and stopping, in response to determining that the first pump is running dry, the first pump. In further features, the method includes stopping, in response to determining that the first pump is running dry, the second pump.

Furthermore, a non-transitory computer-readable medium might be provided to store instructions, wherein the instructions include fluidically connecting both a first tank and a second tank to a pump, measuring a fluid level of the first tank, determining a state of the first tank, in response to determining that the first tank is in a low-level state, fluidically disconnecting the first tank from the pump. The instructions also include measuring a fluid level of the second tank, determining a state of the second tank, and in response determining that both the first tank and the second tank are in the low-level state, fluidically reconnecting the first tank to the pump.

The instructions may include measuring an output of the pump, determining a state of the pump based on the measured output, and in response to determining that the pump is running dry, stopping the pump.

The non-transitory computer-readable medium may store instructions, wherein the instructions include fluidically connecting both a first pump and a second pump to a first tank, measuring a fluid level of the first tank, determining a state of the first tank. The instructions also include in response to determining that the first tank is in a low-level state, (i) fluidically disconnecting both the first pump and the second pump from the first tank and (ii) fluidically connecting both the first pump and the second pump to a second tank, measuring a fluid level of the second tank and determining a state of the second tank, and in response determining that the second tank is in the low-level state, fluidically reconnecting both the first pump and the second pump to the first tank.

The instructions may further include measuring an output of the first pump, determining a state of the first pump based on the measured output, and in response to determining that the first pump is running dry, stopping both the first pump and the second pump.

### BRIEF DESCRIPTION OF THE DRAWINGS

The present disclosure will become more fully understood from the detailed description and the accompanying drawings.
FIG. 1 is a top view of a sprayer system attached to a work machine.
FIG. 2 is a functional block diagram of an example implementation of a multi-tank system according to the principles of the present disclosure.
FIG. 3 is a flowchart depicting an example method of tank balancing.
FIG. 4 is a flowchart depicting an example method of chaining tanks.
FIG. 5 is a flowchart depicting an example method of determining whether a tank is near empty.
FIG. 6 is a flowchart depicting an example method of determining whether a pump is running dry.
FIG. 7 is a flowchart depicting another example method of determining whether a pump is running dry.

In the drawings, reference numbers may be reused to identify similar and/or identical elements.

### DETAILED DESCRIPTION

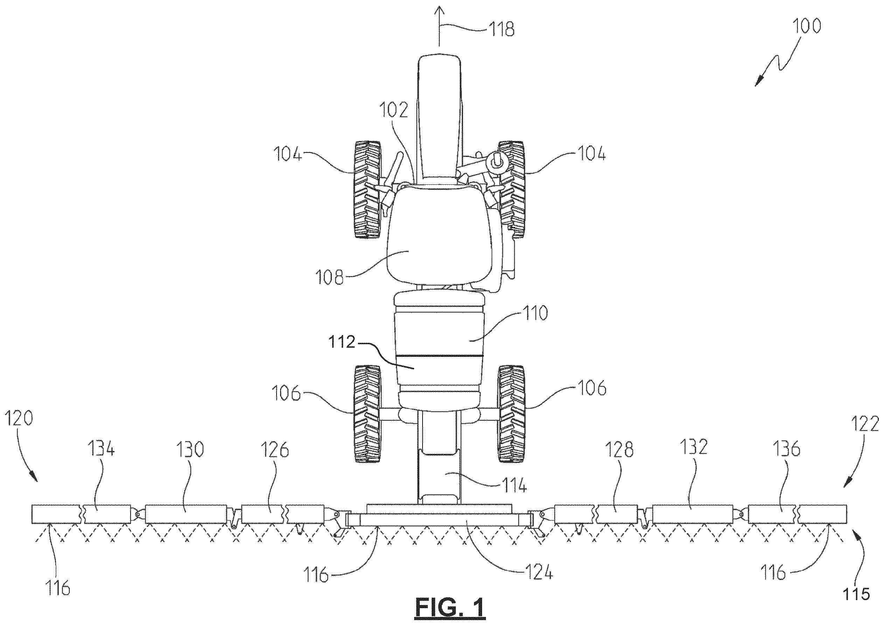

FIG. 1 illustrates an example vehicle carrying a spray boom with spray nozzles mounted on the boom. The vehicle may be a platform or dolly for industrial spray applications or a tractor towing ground-engaging tillage left/right wings with disks and shanks, or a planter towing a row of seed dispenser modules. In FIG. 1 the vehicle is a towed sprayer or a self-propelled agricultural sprayer 100 including a vehicle main frame 102 and an attached autonomous control station or an operator cab 108 for controlling the sprayer 100. The main frame 102 may be supported by a plurality of ground-engaging mechanisms. In FIG. 1, a pair of front wheels 104 and a pair of rear wheels 106 support the main frame and may propel the vehicle in at least a forward travel direction 118. A first tank 110 and a second tank 112 may be mounted to the frame 102 or another frame (not shown) which is attached to the main frame 102. The first tank 110 and the second tank 112 may contain a spray liquid or other substance to be discharged during a spraying operation. In some implementations, the first tank 110 and the second tank 112 are two separate tanks. In other implementations, the first tank 110 and the second tank 112 are different portions-e.g., sealed compartments-of a single tank. Although only two tanks are shown in FIG. 1, the self-propelled agricultural sprayer 100 may include more than two tanks-for example, three for four tanks.

A fixed or floating center frame 114 is coupled to a front or a rear of the main frame 102. In FIG. 1, the center frame 114 is shown coupled to the rear of the main frame 102. The center frame 114 may support an articulated folding spray boom assembly 115 that is shown in FIG. 1 in a fully extended working position for spraying a field. In other implementations, the spray boom assembly 115 may be mounted in front of the agricultural sprayer 100.

A plurality of spray nozzles 116 can be mounted along a plurality of fluid distribution pipes or spray pipes (not shown) that are mounted to the spray boom assembly 115. The plurality of distribution pipes includes a first distribution pipe and a second distribution pipe. Each distribution pipe may be fluidly coupled to the first tank 110 and/or the second tank 112. Each nozzle 116 can have multiple spray outlets, each of which conducts fluid to a same-type or different-type of spray tip. The nozzles 116 on the spray boom assembly 115 can be divided into boom frames or wing structures such as 124, 126, 128, 130, 132, 134, and 136 (or collectively "spray section(s)"). In FIG. 1, the plurality of groups or sections may include a center boom frame 124 which may be coupled to the center frame 114. Although not shown in FIG. 1, a lift actuator may be coupled to the center frame 114 at one end and to the center boom frame 124 at the opposite end for lifting or lowering the center boom frame 124.

The spray boom assembly 115 may be further divided into a first or left boom 120 and a second or right boom 122. In FIG. 1, the first boom 120 is shown on a left side of the spray boom assembly 115, and the second boom 122 is depicted on the right side thereof. In some implementations, a left-most portion of the center boom frame 124 may form part of the first boom 120 and a right-most portion may form part of the second boom 122. The first boom 120 may include those boom frames which are disposed on a left-hand side of the spray boom assembly 115 including a first inner boom frame 126 (or commonly referred to as a "left inner wing"), a first outer boom frame 130 (or commonly referred to as a "left outer wing"), and a first breakaway frame 134. Similarly, the second boom 122 may include those boom frames which are disposed on a right-hand side of the spray boom assembly 115 including a second inner boom frame 128 (or commonly referred to as a "right inner wing"), a second outer boom frame 132 (or commonly referred to as a "right outer wing"), and a second breakaway frame 136. Although seven boom frames are shown, there may any number of boom frames that form the spray boom assembly 115.

As shown in FIG. 1, the first boom frame 126 may be pivotally coupled to the center boom frame 124 via various mechanical couplings. Other means for coupling the first boom frame 126 to the center boom frame 124 may be used. Similarly, the first outer boom frame 130 may be coupled to the first inner boom frame 126, and the first breakaway frame 134 may be coupled to the first outer boom frame 130. In some cases, these connections may be rigid connections, whereas in other embodiments the frames may be pivotably coupled to one another. Moreover, the second inner boom frame 128 may be coupled to the center boom frame 124, and the second outer boom frame 132 may be coupled to the second inner boom frame 128. Likewise, the second breakaway frame 136 may be coupled to the second outer boom frame 136. These couplings may be pivotal connections or rigid connections depending upon the type of boom.

In a conventional spray boom assembly, a tilt actuator may be provided for tilting each boom with respect to the center frame. In FIG. 1, for example, a first tilt actuator may be coupled at one end to the center frame 114 or the center boom frame 124, and at an opposite end to the first boom 120. During operation, the first boom 120 may be pivoted with respect to the center frame 114 or center boom frame 124 such that the first breakaway frame 134 may reach the highest point of the first boom 120. This may be useful if the sprayer 100 is moving in the travel direction 118 and an object is in the path of the first boom 120 such that the tilt actuator (not shown) may be actuated to raise the first boom 120 to avoid contacting the object. The same may be true of the second boom 122. Here, a second tilt actuator (not shown) may be actuated to pivot the second boom 122 with respect to the center frame 114 or the center boom frame 124.

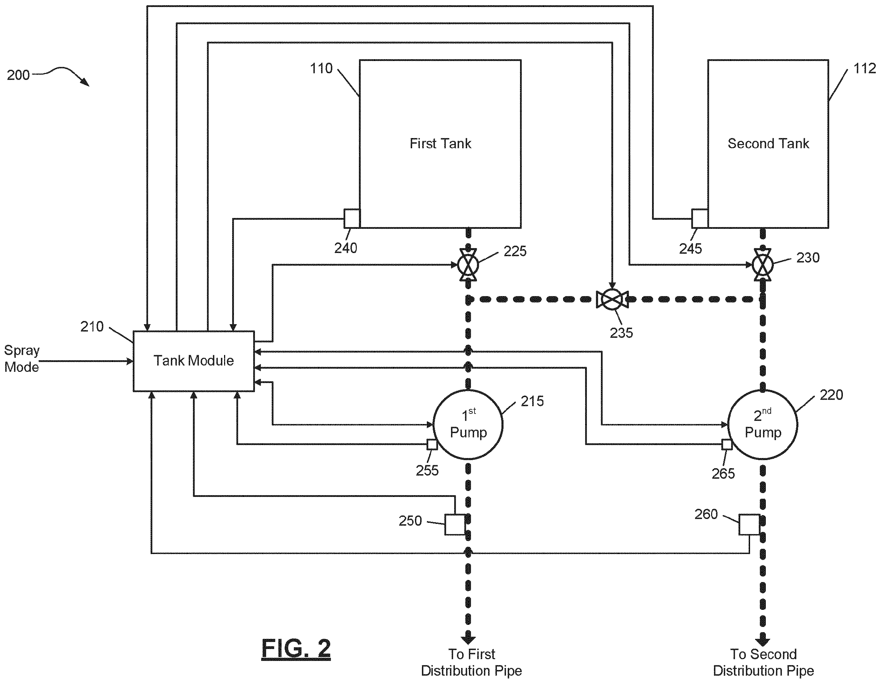

FIG. 2 is a functional block diagram of an example implementation of a multi-tank system 200. As shown in FIG. 2, the multi-tank system 200 includes the first tank 110, the second tank 112, a tank module 210, a first pump 215, and a second pump 220. Although the first tank 110 and the second tank 112 are shown as two separate tanks in FIG. 2, the first tank 110 and the second tank 112 may be different compartments of a single tank. A first level sensor 240 measures the level of the contents of the first tank 110. Similarly, a second level sensor 245 measures the level of the contents of the second tank 112.

The multi-tank system 200 also includes a first sump valve 225, a second sump valve 230, and an equalizing valve 235. A first end of the first sump valve 225 is in fluid communication with the first tank 110. A second end of the first sump valve 225 is in fluid communication with an inlet of the first pump 215 and a first end of the equalizing value 235. A first end of the second sump valve 230 is in fluid communication with the second tank 112. A second end of the second sump valve 230 is in fluid communication with an inlet of the second pump 220 and a second end of the equalizing value 235.

An outlet of the first pump 215 is in fluid communication with the first distribution pipe and provides a flow of fluid to the spray nozzles 116 mounted along the first distribution pipe. A first pressure sensor 250 measures a fluid pressure associated with the output of the first pump 215. A first speed sensor 255 measures the speed of the first pump 215. An outlet of the second pump 220 is in fluid communication with the second distribution pipe and provides a flow of fluid to the spray nozzles 116 mounted along the second distribution pipe. A second pressure sensor 260 measures a fluid pressure associated with the output of the second pump 220. A second speed sensor 265 measures the speed of the second pump 220. The first pressure sessor 250 and the second pressure sensor 260 may be pressure transducers or other sensors capable of measuring the pressure of the fluid outputted by the first pump 215 or the second pump 220, respectively.

The tank module 210 receives a spray mode that indicates how the first tank 110 and the second tank 112 should be used to supply liquid to the plurality of distribution pipes. For example, the received spray mode can indicate that fluid from both the first tank 110 and the second tank 112 should be supplied to the plurality of distribution pipes-i.e., the first spray pipe and the second spray pipe. Such a spray mode may be received when the same or similar liquid is loaded into the first tank 110 and the second tank 112. In other words, the first tank 110 and the second 112 are used to carry the same or similar substance to be applied to the agricultural field.

The tank module 210 actuates the first sump valve 225, the second sump valve 230, and the equalizing valve 235 based on (i) the received spray mode and (ii) the measured tank levels from the first level sensor 240 and the second level sensor 245. The tank module 210 controls the speed of the first pump 215 and the second pump 220 based on (i) the measured fluid pressures from the first pressure sensor 250 and the second pressures sensor 260 and (ii) the measured pump speeds from the first speed sensor 255 and the second speed sensor 265. For example, the tank module 210 can independently start, vary the speed of, or stop the first pump 215 and the second pump 220.

Although shown in FIG. 2 as only including two tanks and two pumps, in some implementations, the multi-tank system 200 includes three or more tanks and/or three or more pumps. The additional tanks and pumps may be connected in a similar fashion as are the tanks and pump shown in FIG. 2. In such implementations, the system includes an additional sump valve and an additional equalizing valve for each additional tank.

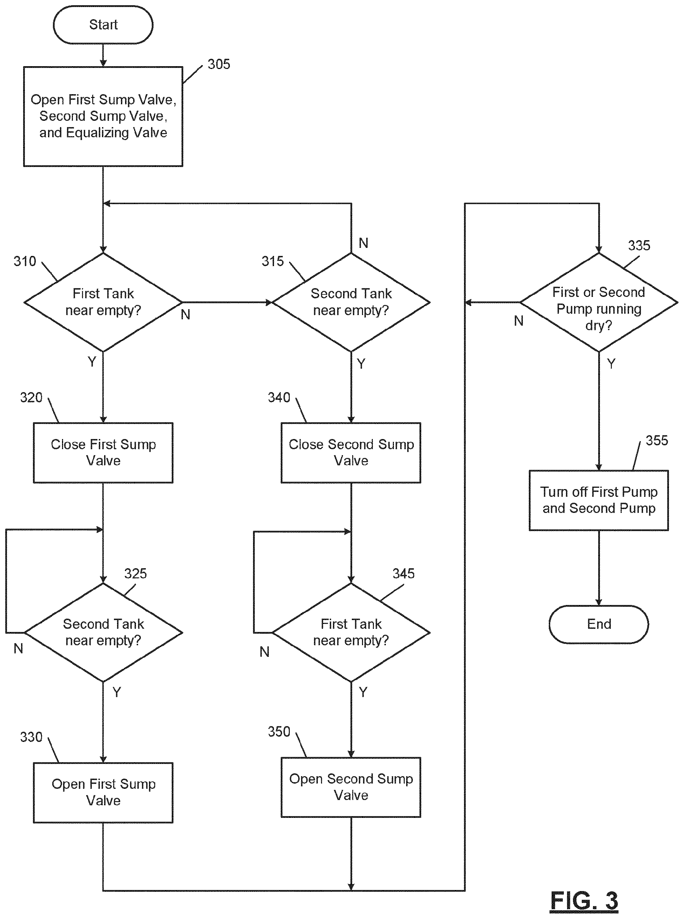

FIG. 3 is a flowchart depicting an example method of tank balancing. In some implementations, control is be performed by the tank module 210. Control begins at 305 upon determining a spray mode indicates that the contents of both the first tank 110 and the second tank 112 should be supplied to both the first distribution pipe and the second distribution pipe. At 305, control causes both the first pump 215 and the second pump 220 to be in fluid communication with the first tank 110 and the second tank 112. For example, the tank module 210 opens the first sump value 225, the second sump valve 230, and the equalizing valve 235. Control continues with 310, where control determines whether the first tank 110 is near empty. For example, the tank module 210 determines whether the first tank is in a low-level state. If so, control progress to 320; otherwise, control transfers to 315.

At 320, control disconnects the first tank 110 from both the first pump 215 and the second pump 220. For example, the tank module 210 closes the first sump valve 225, while keeping both the second sump valve 230 and the equalizing valve 235 open. Control then progresses to 325, where control determines whether the second tank 112 is near empty. If not, control returns to 325; otherwise, control progresses to 330. At 330, control reconnects the first tank 110 to the first pump 215 and the second pump 220. For example, the tank module 210 opens the first sump valve 225, while keeping both the second sump valve 230 and the equalizing value 235 open. Control then progresses to 335.

Returning to 315, control determines whether the second tank 112 is near empty. If so, control progresses to 340; otherwise, control returns to 310. At 340 control disconnects the second tank 112 from both the first pump 215 and the second pump 220. For example, the tank module 210 closes the second sump valve 230, while keeping both the first sump valve 225 and the equalizing valve 235 open. Control then progresses to 345, where control determines whether the first tank 110 is near empty. If so, control progresses to 350; otherwise, control returns to 345. At 350 control reconnects the second tank 112 to the first pump 215 and the second pump 220. For example, the tank module 210 opens the second sump valve 230, while keeping the first sump valve 225 and the equalizing valve 235 open. Control continues with 335.

At 335, control determines whether either the first pump 215 or the second pump 220 is running dry. If so, control transfers to 355; otherwise, control returns to 335. At 355, control deactivates both the first pump 215 and the second pump 220. For example, the tank module 210 commands the first pump 215 and the second pump 220 to stop. Control then ends. While not shown in FIG. 3, in some implementations, control ends at any point in response to control determining that either the first or second pump has stopped-e.g., has been deactivated.

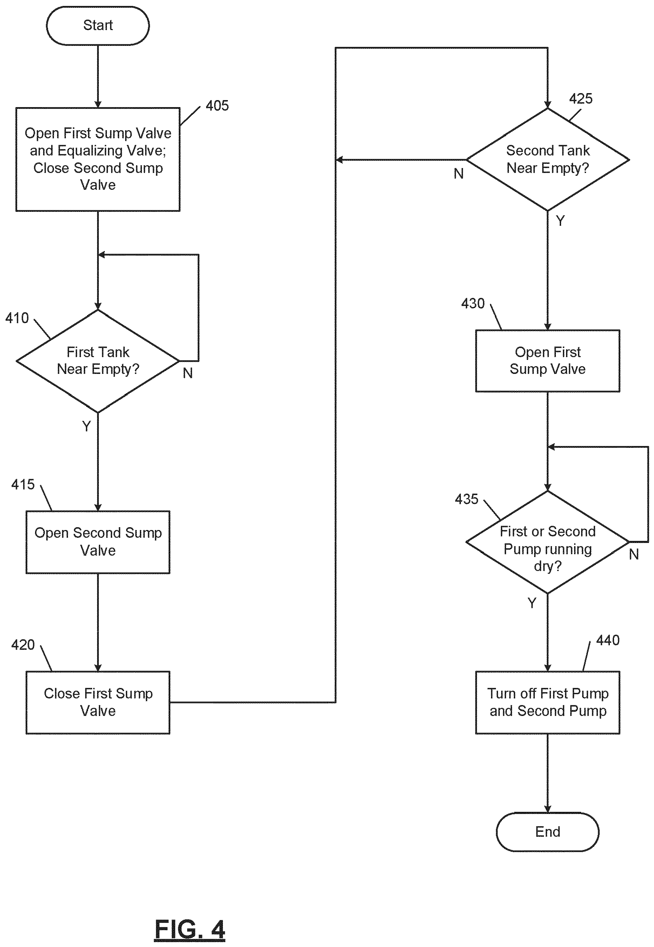

FIG. 4 is a flowchart depicting an example method of tank chaining. In some implementations, control is be performed by the tank module 210. Control begins at 405 upon determining a spray mode indicates that the contents of both the first tank 110 and the second tank 112 should be supplied to both the first distribution pipe and the second distribution pipe. At 405, control causes both the first pump 215 and the second pump 220 to be in fluid communication with the first tank 110 but not the second tank 112. For example, the tank module 210 opens both (i) the first sump value 225 and (i) the equalizing valve 235 and closes the second sump valve 230. Control continues with 410, where control determines whether the first tank 110 is near empty. For example, the tank module 210 determines whether the first tank is in a low-level state. If so, control progress to 415; otherwise, control returns to 410.

At 415, control connects the second tank 112 to both the first pump 215 and the second pump 220. For example, the tank module 210 opens the second sump valve 230, while keeping the equalizing valve 235 open. Control then progresses to 420, where control disconnects the first tank 210 from the first pump 215 and the second pump 220. For example, the tank module 210 closes the first sump valve. Control then progresses to 425.

At 425, control determines whether the second tank 112 is near empty. If so, control progresses to 430; otherwise, control returns to 425. At 430, control connects the first tank 110 and the second tank 112 to both the first pump 215 and the second pump 220. For example, the tank module 210 opens the first sump value 225, while keeping the second sump valve 230 and the equalizing valve 235 open. Control continues with 435.

At 435, control determines whether either the first pump 215 or the second pump 220 is running dry. If so, control transfers to 440; otherwise, control returns to 435. At 440, control deactivates both the first pump 215 and the second pump 220. For example, the tank module 210 commands the first pump 215 and the second pump 220 to stop. Control then ends. While not shown in FIG. 4, in some implementations, control ends at any point in response to control determining that either the first or second pump has stopped-e.g., has been deactivated.

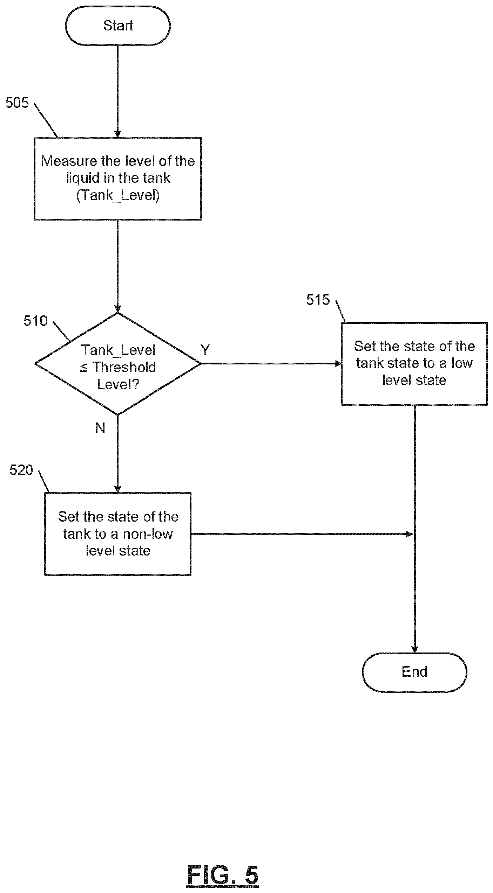

In FIG. 5, example determination of a tank level state begins at 505. At 505, control measures the level of a liquid in the tank (Tank_Level)-for example, the tank module 210 receives a tank level measurement from the first tank level sensor 240 or the second tank level sensor 245. Control continues with 510, where control determines whether Tank_Level is less than or equal to a predetermined threshold level. For example, the tank module 210 may compare the received tank level measurement from the first tank level sensor 240 or the second tank level sensor 245 with a predetermined value that represents a low-level state. In some implementations, the predetermined value represents a tank level of 10% full. In various other implementations, the predetermined value represents a tank level of greater than or less than 10% full.

If control determines at 510 that Tank_Level is less than or equal to the threshold value, control progresses to 515; otherwise, control transfers to 520. At 515, control sets the current state of the tank to a low-level state and then control ends. At 520, control sets the current state of the tank to a non-low-level state and then control ends.

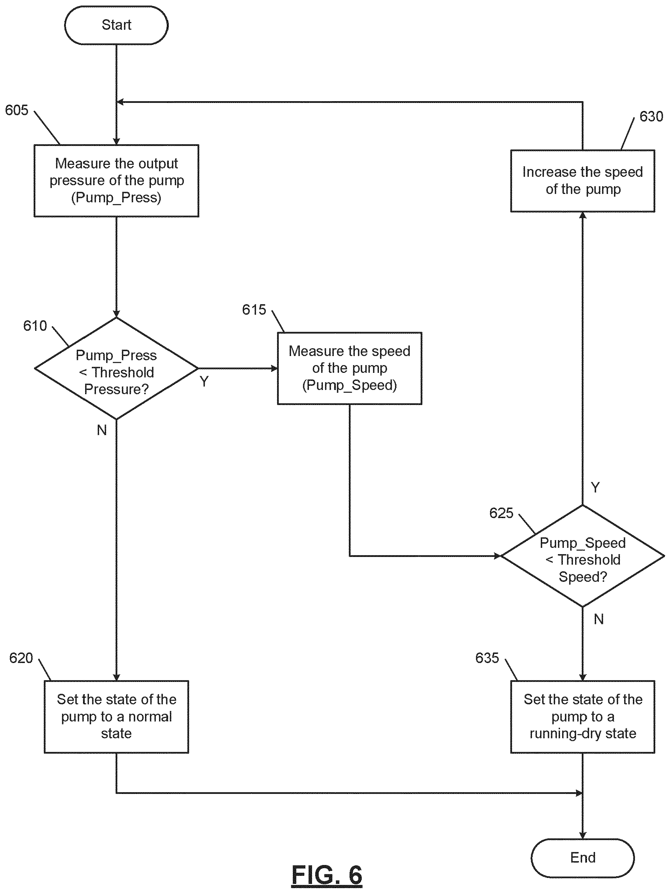

In FIG. 6, example determination of a pump state based on pressure begins at 605. At 605, control measures the output pressure of the pump (Pump_Press). For example, the tank module 210 receives a fluid pressure measurement from the first pressure sensor 250 or the second pressure sensor 260. At 610, control determines whether Pump_Press is less than a threshold pressure. For example, the tank module 210 compares the received output pressure from the first pressure sensor 250 or the second pressure sensor 260 to a predetermined value that represents a low pressure condition. If control determines at 610 that Pump_Press is less than the threshold value, control transfers to 615; otherwise, control progresses to 620, where control sets the state of the pump to a normal state and then control ends.

At 615 control measures the speed of the pump (Pump_Speed). For example, the tank module 210 receives a speed measurement from the first speed sensor 255 or the second speed sensor 265. At 625, control determines whether Pump_Speed is less than a threshold speed. For example, the tank module 210 compares the received speed measurement with the first speed sensor 255 or the second speed sensor 265 to a predetermined value that represents a high pump speed. If control determines at 625 that Pump_Speed is less than the threshold speed, control progresses to 630; otherwise, control transfers to 635. At 635, control sets the state of the pump to a running-dry state. Control then ends.

At 630, control increases the speed of the pump. For example, the tank module 210 commands the first pump 215 or the second pump 220 to operate at a speed faster than the current speed of the pump. In some implementations, the tank module 210 increases the speed of the pump by a predetermined value. Control then returns to 605.

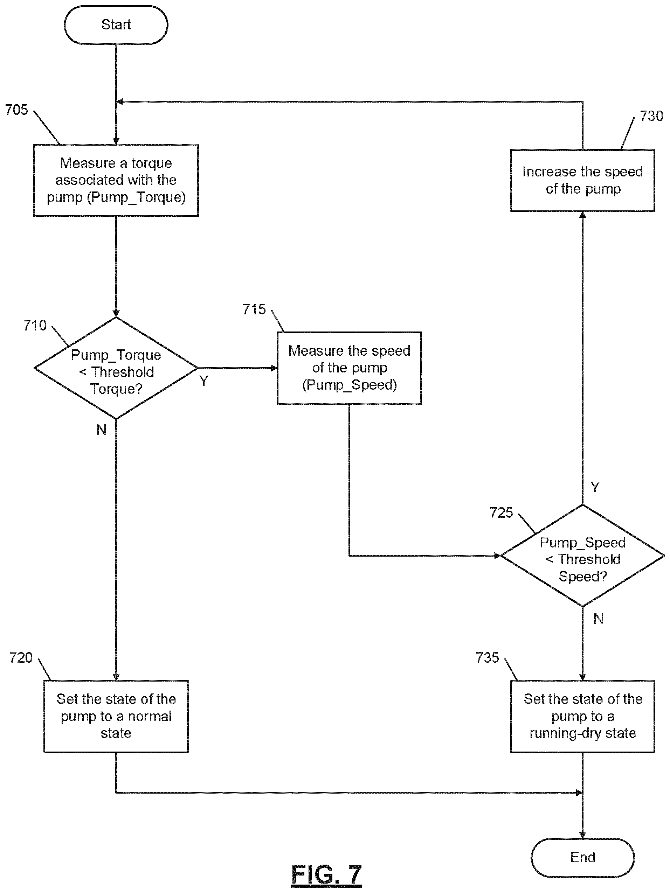

In FIG. 7, example determination of a pump state based on torque begins at 705. At 705, control measures a torque associated with the pump (Pump_Torque). For example, the tank module 210 receives a torque measurement from the first pump 215 or the second pump 220. At 710, control determines whether Pump_Torque is less than a threshold torque. For example, the tank module 210 compares the received torque from the first pump 215 or the second pump 220 to a predetermined value that represents a low torque condition. If control determines at 710 that Pump_Torque is less than the threshold value, control transfers to 715; otherwise, control progresses to 720, where control sets the state of the pump to a normal state and then control ends.

At 715 control measures the speed of the pump (Pump_Speed). For example, the tank module 210 receives a speed measurement from the first speed sensor 255 or the second speed sensor 265. At 725, control determines whether Pump_Speed is less than a threshold speed. For example, the tank module 210 compares the received speed measurement with the first speed sensor 255 or the second speed sensor 265 to a predetermined value that represents a high pump speed. If control determines at 725 that Pump_Speed is less than the threshold speed, control progresses to 730; otherwise, control transfers to 735. At 735, control sets the state of the pump to a running-dry state. Control then ends.

At 730, control increases the speed of the pump. For example, the tank module 210 commands the first pump 215 or the second pump 220 to operate at a speed faster than the current speed of the pump. In some implementations, the tank module 210 increases the speed of the pump by a predetermined value. Control then returns to 705.

The foregoing description is merely illustrative in nature and is in no way intended to limit the disclosure, its application, or uses. The broad teachings of the disclosure can be implemented in a variety of forms. Therefore, while this disclosure includes particular examples, the true scope of the disclosure should not be so limited since other modifications will become apparent upon a study of the drawings, the specification, and the following claims. It should be understood that one or more steps within a method may be executed in different order (or concurrently) without altering the principles of the present disclosure. Further, although each of the embodiments is described above as having certain features, any one or more of those features described with respect to any embodiment of the disclosure can be implemented in and/or combined with features of any of the other embodiments, even if that combination is not explicitly described. In other words, the described embodiments are not mutually exclusive, and permutations of one or more embodiments with one another remain within the scope of this disclosure.

Spatial and functional relationships between elements (for example, between modules, circuit elements, semiconductor layers, etc.) are described using various terms, including "connected," "engaged," "coupled," "adjacent," "next to," "on top of," "above," "below," and "disposed." Unless explicitly described as being "direct," when a relationship between first and second elements is described in the above disclosure, that relationship can be a direct relationship where no other intervening elements are present between the first and second elements, but can also be an indirect relationship where one or more intervening elements are present (either spatially or functionally) between the first and second elements.

As used herein, the phrase at least one of A, B, and C should be construed to mean a logical (A OR B OR C), using a non-exclusive logical OR, and should not be construed to mean "at least one of A, at least one of B, and at least one of C." The term subset does not necessarily require a proper subset. In other words, a first subset of a first set may be coextensive with (equal to) the first set.

In the figures, the direction of an arrow, as indicated by the arrowhead, generally demonstrates the flow of information (such as data or instructions) that is of interest to the illustration. For example, when element A and element B exchange a variety of information but information transmitted from element A to element B is relevant to the illustration, the arrow may point from element A to element B. This unidirectional arrow does not imply that no other information is transmitted from element B to element A. Further, for information sent from element A to element B, element B may send requests for, or receipt acknowledgements of, the information to element A.

In this application, including the definitions below, the term "module" or the term "controller" may be replaced with the term "circuit." The term "module" may refer to, be part of, or include: an Application Specific Integrated Circuit (ASIC); a digital, analog, or mixed analog/digital discrete circuit; a digital, analog, or mixed analog/digital integrated circuit; a combinational logic circuit; a field programmable gate array (FPGA); a processor circuit (shared, dedicated, or group) that executes code; a memory circuit (shared, dedicated, or group) that stores code executed by the processor circuit; other suitable hardware components that provide the described functionality; or a combination of some or all of the above, such as in a system-on-chip.

Some or all hardware features of a module may be defined using a language for hardware description, such as IEEE Standard 1364-2005 (commonly called "Verilog") and IEEE Standard 1076-2008 (commonly called "VHDL"). The hardware description language may be used to manufacture and/or program a hardware circuit. In some implementations, some or all features of a module may be defined by a language, such as IEEE 1666-2005 (commonly called "SystemC"), that encompasses both code, as described below, and hardware description.

The term code, as used above, may include software, firmware, and/or microcode, and may refer to programs, routines, functions, classes, data structures, and/or objects. The term shared processor circuit encompasses a single processor circuit that executes some or all code from multiple modules. The term group processor circuit encompasses a processor circuit that, in combination with additional processor circuits, executes some or all code from one or more modules. References to multiple processor circuits encompass multiple processor circuits on discrete dies, multiple processor circuits on a single die, multiple cores of a single processor circuit, multiple threads of a single processor circuit, or a combination of the above. The term shared memory circuit encompasses a single memory circuit that stores some or all code from multiple modules. The term group memory circuit encompasses a memory circuit that, in combination with additional memories, stores some or all code from one or more modules.

The term memory circuit is a subset of the term computer-readable medium. The term computer-readable medium, as used herein, does not encompass transitory electrical or electromagnetic signals propagating through a medium (such as on a carrier wave); the term computer-readable medium may therefore be considered tangible and non-transitory. Nonlimiting examples of a non-transitory computer-readable medium are nonvolatile memory circuits (such as a flash memory circuit, an erasable programmable read-only memory circuit, or a mask read-only memory circuit), volatile memory circuits (such as a static random access memory circuit or a dynamic random access memory circuit), magnetic storage media (such as an analog or digital magnetic tape or a hard disk drive), and optical storage media (such as a CD, a DVD, or a Blu-ray Disc).

The apparatuses and methods described in this application may be partially or fully implemented by a special purpose computer created by configuring a general purpose computer to execute one or more particular functions embodied in computer programs. The functional blocks and flowchart elements described above serve as software specifications, which can be translated into the computer programs by the routine work of a skilled technician or programmer.

The computer programs include processor-executable instructions that are stored on at least one non-transitory computer-readable medium. The computer programs may also include or rely on stored data. The computer programs may encompass a basic input/output system (BIOS) that interacts with hardware of the special purpose computer, device drivers that interact with particular devices of the special purpose computer, one or more operating systems, user applications, background services, background applications, etc.

The computer programs may include: (i) descriptive text to be parsed, such as HTML (hypertext markup language), XML (extensible markup language), or JSON (JavaScript Object Notation), (ii) assembly code, (iii) object code generated from source code by a compiler, (iv) source code for execution by an interpreter, (v) source code for compilation and execution by a just-in-time compiler, etc. As examples only, source code may be written using syntax from languages including C, C++, C#, Objective-C, Swift, Haskell, Go, SQL, R, Lisp, Java^{®}, Fortran, Perl, Pascal, Curl, OCaml, JavaScript^{®}, HTML5 (Hypertext Markup Language 5th revision), Ada, ASP (Active Server Pages), PHP (PHP: Hypertext Preprocessor), Scala, Eiffel, Smalltalk, Erlang, Ruby, Flash^{®}, Visual Basic^{®}, Lua, MATLAB, SIMULINK, and Python^{®}.

None of the elements recited in the claims are intended to be a means-plus-function element within the meaning of 35 U.S.C. §122(f) unless an element is expressly recited using the phrase "means for," or in the case of a method claim using the phrases "operation for" or "step for".

## Claims

1. A multi-tank spray system (200) comprising:
a first tank (110);
a second tank (112);
a first pump (215);
a plurality of valves including a first sump valve (225), a second sump valve (230), and an equalizing valve (235), wherein a first end of the first sump valve (225) is in fluid communication with the first tank (110), a second end of the first sump valve (225) is in fluid communication with (i) a first end of the equalizing valve (235) and (ii) an inlet of the first pump (215), a first end of the second sump valve (230) is in fluid communication with the second tank (112), and a second end of the second sump valve (230) is in fluid communication with a second end of the equalizing valve (235);
a plurality of sensors (240, 245, 250, 255, 260, 265); and
a tank module (210) configured to:
receive a spray mode;
receive a measurement from at least one sensor of the plurality sensors (240, 245, 250, 255, 260, 265); and
control operation of the plurality of valves (225, 230, 23_5) and the first pump (215) based on (i) the received spray mode and (ii) the received measurement.

2. The multi-tank spray system (200) of claim 1, further comprising a second pump (220), wherein:
the second end of the second sump valve (230) is in fluid communication with an inlet of the second pump (220), and
the tank module (210) is configured to operate the second pump (220) based on (i) the received spray mode and (ii) the received measurement.

3. The multi-tank spray system (200) of claim 1 or 2, further comprising:
a first distribution pipe connected to an outlet of the first pump (215); and
a second distribution pipe connected to an outlet of the second pump (220).

4. The multi-tank spray system (200) of one of the claims 1 to 3, further comprising a plurality of spray nozzles (116), wherein each nozzle of the plurality of spray nozzles (116) is mounted to at least one of the first distribution pipe or the second distribution pipe.

5. The multi-tank spray system (200) of one of the claims 1 to 4, wherein the tank module (210) is configured to, in response to determining that the received spray mode indicates that a first fluid stored in the first tank (110) and a second fluid stored in the second tank (112) should be supplied to the first pump (215), open the (i) first sump valve (225), (ii) the second sump valve (230), and (iii) the equalizing valve (235).

6. The multi-tank spray system (200) of one of the claims 1 to 5, wherein the plurality of sensors includes a first tank level sensor (240) that measures a fluid level of the first tank (110).

7. The multi-tank spray system (200) of one of the claims 1 to 6, wherein the tank module (210) is configured to:
determine a state of the first tank (110) based on the received measurement, and
in response to determining that the first tank (110) is in a low-level state, close the first sump valve (225).

8. The multi-tank spray system (200) of one of the claims 1 to 7, wherein:
the plurality of sensors includes a second tank level (245) sensor that measures a fluid level of the second tank (112), and
the tank module (210) is configured to:
determine a state of the second tank (112) based on a received measurement from the second tank level sensor (240), and
in response to determining that the second tank (112) is in a low-level state, open the first sump valve (225).

9. The multi-tank spray system (200) of one of the claims 1 to 8, wherein:
the plurality of sensors includes a pressure sensor (250) that measures a fluid pressure associated with an outlet of the first pump (215), and
the tank module (210) is configured to:
determine a state of the first pump (215) based on a measurement received from the pressure sensor (250), and
in response to determining that that the first pump (215) is in a running-dry state, stop the first pump (215).

10. A method for controlling a multi-tank spray system (200), the method comprising a multi-tank spray system (200) according to one of the claims 1 to 9, the method further comprising:
fluidically connecting both the first tank (110) and the second tank (112) to a pump (215, 220);
measuring a fluid level of the first tank (110);
determining a state of the first tank (110); and
in response to determining that the first tank (110) is in a low-level state, fluidically disconnecting the first tank (110) from the pump (215, 220).

11. The method for controlling a multi-tank spray system (200) of claim 10, further comprising:
measuring a fluid level of the second tank (112) and determining a state of the second tank (112); and
in response determining that both the first tank (110) and the second tank (112) are in the low-level state, fluidically connecting the first tank (110) to the pump (215, 220).

12. The method for controlling a multi-tank spray system (200) of claim 10 or 11, wherein determining the state of the first tank (110) includes:
comparing the measured fluid level of the first tank (110) to a threshold value, and
in response to determining that the measured fluid level of the first tank (110) is less than the threshold value, setting the state of the first tank (110) to the low-level state.

13. The method for controlling a multi-tank spray system (200) of one of the claims 10 to 12, further comprising:
measuring an output of the pump (215, 220);
determining a state of the pump (215, 220) based on the measured output; and
in response to determining that the pump (215, 220) is running dry, stopping the pump (215, 220).

14. The method for controlling a multi-tank spray system (200) of one of the claims 10 to 13, wherein determining a state of the pump (215, 220) includes:
comparing the measured output to a threshold value, and
in response to determining that the measured output is less than the threshold value, setting the state of the pump (215, 220) to a running-dry state.

15. The method for controlling a multi-tank spray system (200) of one of the claims 10 to 14, wherein fluidically connecting both the first tank (110) and the second tank (112) to the pump (215, 220) includes opening (i) a first sump valve (225) connected to the first tank (110), (ii) a second sump valve (230) connected to the second tank (112), and (iii) an equalizing valve (235) connected to both the first sump valve (225) and the second sump valve (230).
